(19) Europäisches Patentamt
European Patent Office
Office européen des brevets

(11) EP 0 975 100 A1

(12) # EUROPEAN PATENT APPLICATION

(43) Date of publication:
26.01.2000 Bulletin 2000/04

(51) Int Cl.[7]: H04B 7/08

(21) Application number: 98113839.9

(22) Date of filing: 23.07.1998

(84) Designated Contracting States:
AT BE CH CY DE DK ES FI FR GB GR IE IT LI LU MC NL PT SE
Designated Extension States:
AL LT LV MK RO SI

(71) Applicant: SIEMENS AKTIENGESELLSCHAFT
80333 München (DE)

(72) Inventors:
- Brunner, Christopher, Dipl.-Ing.
80798 München (DE)
- Haardt, Martin, Dr.-Ing.
81477 München (DE)

(54) **Receiver and method of recovering data from radio signals**

(57) A receiver which operates to recover data from spread spectrum radio signals, which include radio signals generated from a combination of the data and a data spreading code associated with the user and radio signals generated from a combination of a predetermined sequence of pilot data and a pilot spreading code, the receiver comprising a plurality of antennas (6), each of which is arranged to detect a different version of the radio signals, base band conversion means (14), coupled to the plurality of antennas (6) and arranged to generate, for each antenna, base band signals samples representative of the version of the radio signals, and a data recovery means (16) which operates to correlate each version of the signals samples with respect to the pilot spreading code, form at least one covariance matrix from a frequency domain representation of a predetermined temporal window of the correlated pilot signals samples, correlate each version of the signals samples with respect to the user data spreading code, form a frequency domain representation of each version of the data correlated signal samples, and detect the data from the frequency domain data correlated signal samples in combination with the at least one covariance matrix.

EP 0 975 100 A1

## Description

The present invention relates to receivers which operate to recover data for at least one of the plurality of users from spread spectrum radio signals. Furthermore the present invention relates to a method of recovering data for at least one of a plurality of users from spread spectrum radio signals. More specifically the present invention relates to radio communications apparatus and methods of communicating data via radio signals.

Data is communicated using code division multiple access systems by combining the data with a user specific spreading code and conveying the combination via radio signals transmitted to a receiver. At the receiver, the data is recovered from the radio signals by comparing the received sampled radio signals with the user specific spreading code which is known to the receiver. In this way, a plurality of transmitters operatively coupled to a corresponding plurality of user data sources may be arranged to contemporaneously communicate data from the transmitters to receivers which detect the data by comparing the radio signals with the user specific spreading code uniquely associated with each of the users.

A result of combining the data with a user specific spreading code, is that a bandwidth of the resulting radio signals is greater than that which would be the case if the data was carried by the radio signals alone. As such, the frequency bandwidth occupied by code division multiple access signals is often greater than a coherence bandwidth of the radio communications channel through which the signals pass. Therefore, code division multiple access communicated radio signals are provided with an advantage in that the signals themselves exhibit frequency diversity in that different parts of the bandwidth of the radio signals suffer fading independently.

Code division multiple access is used in both second generation mobile radio systems, and is now being proposed for third generation mobile radio telephone systems. A characteristic of a frequency bandwidth in which radio signals are transmitted in second and third generation mobile radio telephone systems, is that the radio signals travel between transmitters and receivers of the system via a plurality of paths. As a result, data symbols regenerated from the received signals exhibit inter symbol interference which must be cancelled in order for the data to be recovered.

A further advantage of code division multiple access, is that each of the paths via which the radio signals reach the receiver may be individually resolved and the radio signal energy for each of these paths recovered and combined to facilitate detection of the communicated data. A receiver which operates to effect the detection of individual paths in this way, is known to those skilled in the art as the rake receiver. A rake receiver is known to be provided with a plurality of rake fingers, each of which is arranged to correlate the received signals with the user specific spreading code. Each of the fingers of the rake receiver are assigned to one of a plurality of temporal displacements corresponding to one of a plurality of paths via which the radio signals reach the receiver.

A further known receiver for CDMA spread spectrum radio signals is described in a published article entitled "Blind Adaptive 2D Rake Receiver for DS-CDMA Based on Space-Frequency MVDR Processing," which is known to have been submitted for publication to the IEEE Journal on Transactions on Signal Processing, June 1996, but is currently available on the Internet. This article discloses a rake receiver operatively associated with an array of antennas which are arranged to provide spatial diversity with respect to the detected radio signals. Furthermore, each of the rake fingers operates to correlate the received signals and to form a frequency domain representation of the correlated signals in order to detect and recover data from the detected radio signals. This rake receiver is referred to in the following description as a two dimensional space-frequency rake receiver.

Mobile radio telecommunications systems are arranged to use, as efficiently as possible, an allocated portion of the radio frequency spectrum within which they operate. For the case of wireless communications systems which operate to provide data communications according to CDMA, a substantial contribution to this efficient use is the ability of the receivers of the CDMA radio signals to recover the data in the presence of contemporaneously detected radio signals.

It is therefore an object of the present invention to provide an improved receiver for detecting and recovering data communicated using code division multiple access.

A receiver according to the invention operates generally to effect a two dimensional space-frequency rake receiver, in which space-frequency covariance matrices formed as part of the detection process are established using known data sequences communicated with the data.

According to the present invention there is provided a receiver which operates to recover data for at least one of a plurality of users from spread spectrum radio signals, which include radio signals generated by combining the data and a data spreading code associated with the user and radio signals generated by combining a predetermined sequence of pilot data and a pilot spreading code, the receiver comprising a plurality of antennas, each of which is arranged to detect a different version of the radio signals, base band conversion means, coupled to the plurality of antennas and arranged to generate, for each antenna, base band signals samples representative of the version of the radio signals, and a data recovery means which operates to correlate each version of the signals samples with respect to the pilot spreading code, form at least one covariance matrix from a frequency domain representation of a predetermined temporal window of the correlated pilot signal samples, correlate each version of the signals samples with

respect to the user data spreading code, form a frequency domain representation of each version of the data correlated signal samples, and detect the data from the frequency domain data correlated signal samples in combination with the at least one covariance matrix.

By exploiting the known pilot data sequences communicated with the user data to estimate the space-frequency covariance matrices, detection and recovery of the data from the spread spectrum radio signals is facilitated.

The data recover means may comprise a rake detector means for each antenna, each of which rake detector means may have a correlator means, which operates to correlate the signal samples with the user data spreading code, and the pilot spreading code, and a frequency conversion means, coupled to the correlator means which operates to generate the frequency domain representation of the data correlated signals and the pilot correlated signal samples.

The data recovery means may further include a combiner means coupled to each of the rake detector means, which operates to form the at least one covariance matrix and to combine the covariance matrix with the frequency domain data correlated signal samples and a data detector means which operates to estimate the data symbols from the combination.

The data recovery means may be a two dimensional space-frequency rake receiver. The at least one co-variance matrix formed by the combiner means may be a signal plus interference and noise space-frequency co-variance matrix obtained from the frequency domain representation of the pilot correlated signal samples. The at least one co-variance matrix may further include an interference and noise-covariance matrix obtained from the frequency domain representation of the pilot correlated signal samples.

The frequency domain representation of the correlated data symbols generated by each rake detector means may be combined by the combiner means to form a data signal plus interference and noise space-frequency snapshot.

The combiner means may further operate to estimate a weight vector (w) from either a signal space-frequency covariance matrix or the signal plus interference and noise space-frequency co-variance matrix, in combination with the interference and noise-covariance matrix, and multiply a hermitian transpose of the weight vector by the data signal plus interference and noise space-frequency snapshot. The detector means may operate to detect the data symbols from the result of the multiplication.

The pilot symbols may be transmitted at the beginning of each of a predetermined plurality of data symbols known as a dedicated physical control channel. The pilot symbols are used to estimate the space frequency covariance matrix. The space frequency covariance matrix may be used to obtain the weight vector used to effect symbol detection in the receiver.

As a result of the fact that radio signals from some users will be received with a considerably higher signal strength than radio signals received from other users, data symbols transmitted by users with strong signals will be more easily detected than symbols from users with relatively weaker radio signals. This is known to those skilled in the art as the near-far problem.

The advantages of using a single user symbol detector based on adaptive antennas combined with multi-user interference cancellation in the space frequency domain, as effected by the receiver according to the present invention, is that a reduction in the near-far effect is facilitated and furthermore compared to a two-dimensional space time rake receiver the two-dimensional space frequency rake receiver is not limited by or to a finite number of rake fingers.

As a result of the reduction in the near-far effect, a radio communication system operating with the receiver can be effected with substantially less stringent power control requirements. Furthermore the receiver is able to detect the data with a substantial reduction in the complexity as compared to a space time rake receiver.

According to an aspect of the present invention there is provided a method of recovering data for at least one of a plurality of users from spread spectrum radio signals, which include radio signals generated from a combination of the data and a data spreading code associated with the at least one user, and radio signals generated from a combination of a predetermined sequence of pilot data and a pilot spreading code, the method comprising the steps of, detecting the radio signals at each of a plurality of antennas, for each antenna, generating base band digital signal samples representative of the radio signals, for each antenna, correlating the signals samples with respect to the pilot spreading code, forming at least one covariance matrix from a frequency domain representation of a predetermined temporal window of the correlated pilot signal samples, for each antenna, correlating the signals samples with respect to the user data spreading code, for each antenna, forming a frequency domain representation of the data correlated signal samples, and detecting the data from the frequency domain data correlated signal samples in combination with the at least one co-variance matrix.

According to a further aspect of the present invention there is provided apparatus for communicating data via radio signals, comprising means for generating spread spectrum radio signals representative of a combination of the data and a data spreading code associated with at least one user, and a combination of a predetermined sequence of pilot data and a pilot spreading code, a plurality of antennas, each of which is arranged to detect a different version of the radio signals, base band conversion means, coupled to the plurality of antennas and ranged to generate, for each antenna, base band signals samples representative of the version of the radio signals, a data recovery means which

operates to correlate each version of the signals samples with respect to the pilot spreading code, form at least one covariance matrix from a frequency domain representation of a predetermined temporal window of the correlated pilot signal samples, correlate each version of the signals samples with respect to the user data spreading code, form a frequency domain representation of each version of the data correlated signal samples and detect the data from the frequency domain data correlated signal samples in combination with the at least one covariance matrix.

According to a further aspect of the present invention, there is provided a method of communicating data via radio signals, the method comprising the steps of, generating radio signals representative of the data combined with a data spreading code associated with the at least one user, and which radio signals are also representative of a combination of a predetermined sequence of pilot data and a pilot spreading code detecting the radio signals at each of a plurality of antennas for each antenna, generating base band digital signal samples representative of the radio signals for each antenna, correlating the signals samples with respect to the pilot spreading code, forming at least one covariance matrix from a frequency domain representation of a predetermined temporal window of the correlated pilot signals samples, for each antenna, correlating the signal samples with respect to the user data spreading code, for each antenna, forming a frequency domain representation of the data correlated signal samples and detecting the data from the frequency domain data correlated signal samples in combination with the at least one co-variance matrix.

One embodiment of the present invention will now be described, by way of example only, with reference to the accompanying drawings wherein;

FIGURE 1 is a schematic block diagram of a mobile radio telecommunication system;

FIGURE 2 is a schematic illustration of the propagation of radio signals from the mobile stations shown in Figure 1 to a one of the base stations shown in Figure 1;

FIGURE 3 is an illustrative diagram of a radio access frame structure for CDMA signals;

FIGURE 4 is a schematic block diagram of a receiver embodied in one of the base stations shown in Figures 1 and 2;

FIGURE 5 is an illustrative representation of the operation of the receiver shown in Figure 4.

The example embodiment of the present invention will be illustrated with reference to a mobile radio telecommunication system and in particular to a mobile radio communication system which operates in accordance with code division multiple access (CDMA).

An illustrative example of a mobile radio telecommunication system is provided in Figure 1. In Figure 1 a plurality of mobile stations MS, are shown to communicate using radio signals 1, transmitted between the mobile stations MS and a plurality of base stations BS. The base stations are disposed in a spaced part relationship so as provide a radio coverage area which may be viewed as being made up from a number of cells 2. A cell 2, is defined as a geographical area within which radio communications may be effected with a base station as opposed to any of the other base stations in a mobile radio network. In Figure 1 the cells 2, formed for each of the three base stations BS illustrated are defined by the broken line 4. The mobile stations communicate data with each of the base stations using radio signals 1, which are detected by the receive antenna 6. The base stations BS of the mobile radio network are coupled together via a mobile network infra-structure shown generally as NET.

A characteristic of CDMA radio access techniques is that mobile stations MS, are arranged to communicate radio signals contemporaneously to the base stations BS, which operate to recover the data symbols communicated by the mobile stations by correlating the received radio signals with a user specific spreading code. Data is communicated between the base station BS and mobile stations MS by modulating the data with a user specific spreading code and then modulating the result onto a radio frequency carrier. At the receivers in the respective base and mobile stations, the received radio signals are correlated with the user specific spreading sequence to the effect that the data symbols are recovered in spite of the presence of contemporaneously detected CDMA signals from other mobile stations. Each of the mobile stations MS may be considered to be a user of the system and as such the term user will be used in the following description to identify signals or data to be communicated from a particular source to a particular sink.

An illustration of the communication of CDMA signals between the mobile stations MS and one of the base stations BS shown in Figure 1 is illustrated in Figure 2 where parts also appearing in Figure 1 bear identical numerical designations. In Figure 2 a plurality of mobile stations MS are shown to communicate radio signals, contemporaneously with the base station BS. A characteristic of the transmission of radio signals within a bandwidth which has been assigned to mobile radio communication systems is that the radio signals reach the receive antenna via a plurality of paths. This is illustrated in Figure 2 by the lines 8, 10, which comprise direct paths 8 and often indirect paths 10, which are reflected via objects such as buildings 12. As a result of the multi path propagation of the radio signals, the data

communicated by the radio signals will exhibit inter symbol interference in a case where a temporal difference in the time taken for the radio signals to reach the base station BS via at least two different paths is greater than a symbol period. As such the base station BS, must be provided with means to mitigate the effect of multi-path propagation.

The base station shown in Figure 2 is provided with a plurality of receive antennas 6 coupled to a down-conversion receiver front end 14. As illustrated in Figure 2 the base station BS detects the received radio signals using the plurality of receive antennas 6, and communicates each version of the detected radio signals to the front-end receiver 14. The front-end receiver 14 operates to downconvert and analogue to digital convert the received radio signal versions and feeds the base band digital samples to a data recovery means 16, via a conductor 18. The down-conversion receiver front end 14, generates base band signal samples for each version of the radio signals detected by the receive antennas 6. The data recovery means 16, operates to recover the data communicated for at least one user which is output is on a conductor 20.

For the illustrative embodiment of the present invention, the CDMA radio access technique is arranged to be provided with two types of dedicated physical channels. These are illustrated in Figure 3 for a radio frequency carrier signal having an in phase (I-channel) and quadrature phase (Q-channel) signal components. The I- and Q-channel components of the radio frequency carrier are illustrated by the lines 22, 24, 26, 28 with time going from left to right across the page. The I- and Q-phases of the carrier are divided in time into time slots which are allocated for the transmission of particular types of data. For the case of the I-channel shown in Figure 3a, the carrier frequency is dedicated to the transmission of $N_D$ data symbols spread using a spreading code having $n_D$-chips per symbol. This is given the designation of a Physical Data Channel (PDCH). For the Q-channel the carrier Q-phase is provided with $N_c$ spread control symbols, of which $N_p$ spread symbols are allocated for transmitting pilot symbols having $n_c$ chips/symbol. This is given the designation of a Physical Control Channel (PCCH). The part allocated for the transmission of pilot symbols is designated 30, and that allocated for the transmission of other types of control symbols is designated 32.

In the example embodiment, the CDMA mobile radio system is, therefore provided with two types of dedicated physical channels which may be on the up-link or the down-link. These are the Dedicated Physical Control Channel (PCCH) and the Dedicated Physical Data Channel (PDCH). In case of low or medium data rates, one connection consists of the PCCH and one PDCH.

The PDCH base-band signal of the user of interest may be expressed as given in equation:

$$s_D(t) = \sum_{l=-\infty}^{\infty} b_D^{(l)} w_D(t - lT_D) \qquad (1)$$

Where in equation (1),

$$w_D(t) = \sum_{m=1}^{n_D} d_m p(t - mT_C) \ .$$

An example chip rate is $1/T$ 4.096 Mchips/s. Moreover, the spreading sequence of the PDCH, $W_D(t)$, is of length $T_D = n_D T_c$ and is composed of $n_D$ chips $d_m \in \{-1,1\}$, $1 \leq m \leq nD$. The symbols, $b_D^{(l)} \in \{-1,1\}$ are BPSK modulated. The example CDMA system uses a chip waveform, $p(t) \in R$ characterised by a square-root raised cosine spectrum with a roll-off factor of $\alpha$ = 0,22. The PCCH base band signal, $s_c(t)$, can be expressed in the same way. For the example embodiment, a combination of code and I and Q multiplexing is used to convey the data and pilot symbols as illustrated in Figure 3. The PDCH and PCCH are spread by different spreading codes and mapped on to the I and Q branches respectively, according to equation (2):

$$s(t) = s_D(t) + js_c(t) \qquad (2)$$

The receiver embodied within the base station BS shown in Figure 2 is illustrated in Figure 4 where parts also appearing in Figures 1, 2 and 3 bear identical alpha-numeric designations. In Figure 4 the plurality of receive antennas 6 are shown to be connected to a corresponding plurality of base band demodulators 40. The outputs of the base band demodulators 40, are further coupled to analogue to digital converters 42, which operate to generate digital samples representative of the base band version of the radio signals provided by the base band demodulators 40. As will be

appreciated although there are only three receive antennas 6 shown in Figure 4 any number of receive antennas could be used which would be coupled to corresponding base band demodulators and analogue to digital converters. Each of the analogue two digital converters feeds over sampled signals on conductors 18 to a corresponding rake finger 44 forming part of the data recovery means 16. The rake fingers 44 form part of a two-dimensional-space frequency rake receiver. Each of the rake fingers 44, is provided with first and second correlators 46, 48, arranged to receive the over sampled signals in parallel. For each of the first and second correlators 46, 48 there is provided a discrete fourier transformer 50, 52. Each of the outputs of the discrete fourier transformers 50, 52, are fed to a weighting factor generator 54. The weighting factor generator 54 is coupled to a combiner 56, via a plurality of conductors corresponding to each of the weighting factors $\boldsymbol{w_i}$ generated by the weighting factor generator. The output of the combiner 56, is fed to a symbol decision maker 58, which serves to determine the data symbol for the corresponding user, which is output on conductor 20.

The operation of the receiver shown in Figure 4 will now be described in the following paragraphs. However a full description of a two-dimensional space-frequency rake receiver will not be given, as this is provided in the above referenced published article by Zoltowski *et al*, submitted to the IEEE transactions on signal processing in June 1996, the contents of which, and in particular the operation of the two-dimensional space-frequency rake receiver, are incorporated herein by reference.

The structure of the two-dimensional space-frequency rake receiver shown in Figure 4, differs from the known two-dimensional space-frequency rake in that the space-frequency covariance matrices $\boldsymbol{R_{S+I+N}}$ and $\boldsymbol{R_{I+N}}$ are generated from the pilot symbols 30, transmitted at the beginning of the PCCH time slot. Each of the rake fingers 44, serves to recover a symbol estimate for a plurality of $\boldsymbol{M_3}$ frequency bins. Within each of the rake fingers 44, the first correlator 46, is arranged to correlate the received signals with respect to the pilot spreading code. The second correlator 48, is arranged to cross-correlate the received signals with the user data spreading code provided for the data channel.

The receiver shown in Figure 4, uses the pilot symbols at the beginning of the PCCH slot to generate the space-frequency covariance matrices $\boldsymbol{R_{S+I+N}}$ and $\boldsymbol{R_{I+N}}$. From this, a "largest" generalised eigenvector is obtained with an optimum weight vector w which then is applied to the data symbols detected from the PDCH to recover the data symbols.

Single-user symbol detection in CDMA systems must take multi-user interference into account to achieve a significant increase in performance. By estimating the interference and noise space-frequency covariance matrix $\boldsymbol{R_{I+N}}$ in addition to the signal space-frequency covariance matrix $\boldsymbol{R_S}$ or the signal and interference plus noise space-frequency covariance matrix $\boldsymbol{R_{S+I+N}}$, the signal to interference and noise ratio (SINR) can be maximised according to equation (3) :

$$\mathrm{SINR} = \max_{w} \frac{w^H R_S w}{w^H R_{I+N} w} = \max_{w} \frac{w^H R_{S+I+N} w}{w^H R_{I+N} w} - 1 \qquad (3)$$

The optimum weight vector $\boldsymbol{w}$, which is the largest generalised eigenvector of the $\boldsymbol{MM_3 x MM_3}$ matrix pencil $\{\boldsymbol{R_S}, \boldsymbol{R_{I+N}}\}$, is applied to space-frequency `snapshots' of the PDCH corresponding to the data symbols, obtained for each rake finger 44. The number of frequency bins and the number of antenna elements are denoted by $\boldsymbol{M_3}$ and $\boldsymbol{M}$, respectively. If the estimation takes place in the space-frequency domain instead of the space-time domain, frequency bins with low power can be omitted, thus reducing the computational complexity of (3).

The space-frequency covariance matrices and, therefore, the optimum weight vector $\boldsymbol{w}$ are estimated from the PCCH. At the beginning of each PCCH slot 30, $\boldsymbol{N_p}$ pilot symbols are broadcast. The receiver is assumed to be synchronised to the beginning of a slot. The over-sampled output of each antenna element is passed through the first correlator 46, which can be described by equation (4):

$$c_C(nT_I) = \sum_{l=0}^{N_p-1} b_C^{(l)} w_C(nT_I - lT_C) \in C^{N_p n_C M_C} \qquad (4)$$

where $T_c$ is the chip duration, $N_s$ is the number of chips within the correlation window and $M_c$ is the number of samples per chip. Defining a matrix $\aleph_{cor} \in C^{M \times (N_S M_C)}$, containing $N_S M_C$ samples of the output of the corresponding antenna element after the first correlator, a selection matrix is formed, as expressed by equation (5):

$$J^{(i)} = \begin{bmatrix} 0_{(i-1)\times N_w} \\ I_{N_w \times N_w} \\ 0_{(N_s M_c - i - N_w + 1)\times N_w} \end{bmatrix} \quad (5)$$

where the maximum propagation delay in samples is denoted by $N_w = M_c \frac{\tau_{max}}{T}$. If $i$ = 1 holds, $\aleph_{cor} J^{(1)} \in C^{M \times N_w}$ corresponds to the multipath delay spread. The output for $i = N_w, N_{w+1}, \ldots, N_s M_c^c - N_w$ is used to estimate the interference and noise covariance matrix. The ith space-frequency snapshot provided by respective rake fingers is defined as expressed in equation (6):

$$y^{(i)} = vec\left\{\aleph_{cor} J^{(i)} W\right\} \quad (6)$$

Here, ***vec{A}*** denotes a vector-valued function that maps an mxn matrix ***A*** into an ***mn***-dimensional column vector by stacking the columns of the matrix.

It is well known that each column of the $N_w$-point DFT matrix $W$ is of the form expressed in equation (7):

$$w_l = [1 \; e^{-jlw_0} \; e^{-j2lw_0} \; e^{-j(N_w-1)lw_0}]^T \quad (7)$$

Here, the columns of $W$ compute $M_3 \leq N_w$ frequency bins centred at DC according to equation (8):

$$W = [w_{N_w-(M_3-1)/2} \cdots w_0 \cdots w_{(M_3-1)/2}] \quad (8)$$

where the wrap-around property of the DFT matrix has been utilised. The channel is assumed to stay constant for the duration of one slot. Therefore, the signal plus interference and noise space-frequency covariance matrix is estimated based only on one space-frequency 'snapshot', and is expressed according to equation (9):

$$\hat{R}_{S+I+N} = y^{(1)} \cdot y^{(1)H} \quad (9)$$

Notice that $\aleph_{cor} J^{(1)}$ comprises the multipath delay spread of the correlator output for the user of interest, as illustrated in Figure 4. The interference plus noise space-frequency covariance matrix is estimated as expressed by equation (10):

$$\hat{R}_{I+N} = \frac{1}{N_s M_c - 2N_w + 1} \sum_{i=N_w}^{N_s M_c - N_w} y^{(i)} \cdot y^{(i)H} \quad (10)$$

The known two-dimensional space-frequency rake receiver as disclosed in by Zoltowski et al, is based on a blind estimate of the covariance matrices, whereas the example embodiment of the invention, shown in Figure 4, is not blind due to the fact that the pilot symbols at the beginning of each PCCH slot are exploited to estimate the space-frequency covariance matrices. Moreover, the obtained weight vector w is estimated in the PCCH and applied to the

PDCH for symbol detection.

We assume that the receiver is synchronised to the beginning of the $l$th bit in the PDCH slot. The over-sampled output of each antenna element is passed through the second correlator 48, for each rake finger. This is expressed by equation (11):

$$c_D(nT_l) = w_D(nT_l - lT_D) \in C^{n_D M_c} \quad (11)$$

Defining a matrix $\aleph_D^{(l)} \in \boldsymbol{C}^{M \times N_w}$ in which each row of contains $\boldsymbol{N_w}$ signal samples from the corresponding antenna element after the correlator 48. The space-frequency `snapshot' corresponding to the $l$th communicated data bit from the PDCH time slot is obtained according to (6), as expressed in equation (12):

$$y_D^{(l)} = vec\left\{\aleph_D^{(l)} J^{(1)} W\right\} \quad (12)$$

The optimum decision statistic may then be expressed as $\hat{\boldsymbol{b}}^{(l)} = \boldsymbol{w}^H \cdot \boldsymbol{y}_D^{(l)}$, as disclosed in the above referenced published article by Zoltowski et al, where w is the optimum weight vector defined in equation (3).

A illustration of the operation of the receiver shown in Figure 4, is provided in Figure 5, where parts also appearing in Figure 4 bear the same numerical designations. In Figure 5, the signal samples generated at the output of the first and second correlators 46, 48, are represented as lines 60, 62, plotted with reference to a two dimensions of amplitude (x-axis) and time (y-axis). The time slot within which the signal samples are generated is shown to be comprised of $\boldsymbol{N_S M_C}$ signal samples. For the first plot 60, which corresponds to the result of the cross correlation of the control channel spreading code with the received signals, a window 64, of $\boldsymbol{N_w}$ samples, from the start of the time slot are fed to the discrete fourier transformer 50, which thereby forms the co-variance matrix $\boldsymbol{R_{S+I+N}}$. To the rest of the samples, a sliding correlation window 66, is applied and these samples also fed to the discrete fourier transformer 50, to generate the co-variance matrix $\boldsymbol{R_{I+N}}$. Correspondingly, for the data channel, a correlation window 68, having $\boldsymbol{N_w}$ signal samples at the start of the burst are fed to the second discrete fourier transformer 52, to form the decision vector according to equation (12).

A step by step description of the operation of the data detector shown in Figure 4, is presented in the following paragraphs:

Step 1: Base band demodulation

The signals are received at the elements of the adaptive antenna array and are demodulated down to base band.

Step 2: Sampling

Using an analogue-digital-converter (ADC), the analogue signals are over sampled.

Step 3: Correlation

A (moving) window is applied to the ADC outputs and is correlated with the pilot sequence which is positioned at the beginning of each PCCH slot and which is adapted to scrambling. We assume that the first window of the ADC outputs is synchronised to the beginning of the PCCH slot. The size of the window matches the multi-path delay spread.

The samples of all PCCH correlator outputs which belong to the first window are used to generate the signal plus interference and noise space frequency covariance matrices. The samples from the PCCH correlator following, are used to generate the interference and noise space frequency covariance matrix.

Step 4: Generation of the signal plus interference and noise space frequency covariance matrix

The samples comprising the multi-path delay spread (first window) are transformed into the space-frequency domain by a discrete Fourier transformation (DFT). The signal plus interference and noise space-frequency snapshot obtained determines the signal plus interference and noise space frequency covariance matrix according to equation

(9).

Step 5: Generation of the interference and noise space frequency covariance matrix

The signal plus interference and noise space frequency covariance matrix is generated by averaging over the space-frequency snapshots generated by a sliding correlator (sliding window) and a DFT transformation according to equation (10).

Step 6: Estimation of the optimum weight vector

The optimum weight vector is the largest generalised eigenvector of the matrix pencil defined by the signal space-frequency covariance matrix and the interference and noise-covariance matrix according to equation (3). With a minor change in equation (3), the signal plus interference and noise space frequency covariance matrices is used instead of the signal space frequency covariance matrix.

Step 7: Obtaining the decision variables of the data symbols

Assuming the output of the PDCH correlator is synchronized to the beginning of a symbol. A signal plus interference and noise space-frequency snapshot is obtained which corresponds to the symbol of interest in the same way as the signal plus interference and noise space-frequency snapshot was obtained for the PCCH in step 4. According to $\boldsymbol{b}^{(l)} = \boldsymbol{w}^{H} \cdot \boldsymbol{y}_{D}^{(l)}$, the decision variable is obtained by multiplying the Hermitian of the optimal weight vector with the signal plus interference and noise space frequency snapshot of the data symbol of interest.

Note that the control symbols which are not pilot symbols are obtained in the same way in the PCCH.

Step 8:

This procedure is repeated for each slot.

Various modifications may be made to the example embodiment herein before described without departing from the scope of the present invention. In particular other ways of combining the outputs of each of the discrete fourier transformers may be envisaged in order to effect recovery of the data symbols. Furthermore other arrangements of modulating or combining the data with the spreading codes may be effected in accordance with a wide or narrow band code division multiple access technique.

## Claims

**1.** A receiver which operates to recover data for at least one of a plurality of users from spread spectrum radio signals, which include radio signals representative of a combination of the data and a data spreading code associated with said at least one user and a combination of a predetermined sequence of pilot data and a pilot spreading code, said receiver comprising

- a plurality of antennas (6), each of which is arranged to detect a different version of said radio signals,
- base band conversion means (14), coupled to said plurality of antennas and arranged to generate, for each antenna, base band signals samples representative of said version of said radio signals,
- a data recovery means (16) which operates to
- correlate each version of said signals samples with respect to said pilot spreading code,
- form at least one covariance matrix from a frequency domain representation of a predetermined temporal window of said correlated pilot signal samples,
- correlate each version of said signals samples with respect to said user data spreading code,
- form a frequency domain representation of each version of said data correlated signal samples, and
- detect said data from said frequency domain data correlated signal samples in combination with said at least one covariance matrix.

**2.** A receiver as claimed in Claim 1, wherein said data recover means (16) comprises

- a rake detector means (44) for each antenna (6), each of which rake detector means comprises
- a correlator means (46, 48), which operates to correlate said signal samples with said user data spreading code, and said pilot spreading code, and

- a frequency conversion means (50, 52), coupled to said correlator means (46, 48) which operates to generate said frequency domain representation of said data correlated signals and said pilot correlated signal samples, said data recovery means further including
- a combiner means (54, 56) coupled to each of said rake detector means, which operates to form said at least one covariance matrix and to combine said covariance matrix with said frequency domain data correlated signal samples and
- a data detector means (58) which operates to estimate said data symbols from said combination.

**3.** A receiver as claimed in Claim 2, wherein the at least one co-variance matrix formed by said combiner means (54, 56) comprises a signal plus interference and noise space-frequency co-variance matrix obtained from the frequency domain representation of said pilot correlated signal samples within said temporal window from each of said rake detector means (44) in temporal correspondence with said pre-determined pilot data sequence.

**4.** A receiver as claimed in Claims 2 or 3, wherein said at least one co-variance matrix formed by said combiner means (54, 56) further includes an interference and noise-covariance matrix obtained from the frequency domain representation of said pilot correlated signal samples within said temporal window from each of said rake detector means (44) at different temporal displacements to the transmission of the pre-determined pilot data sequence.

**5.** A receiver as claimed in any preceding Claim, wherein the frequency domain representation of said correlated data symbols generated by each rake detector means are combined by said combiner means (54, 56) to form a data signal plus interference and noise space-frequency snapshot.

**6.** A receiver as claimed in Claim 5, wherein the combiner means (54) further operates to

- estimate a weight vector (***w***) from either a signal space-frequency covariance matrix or the signal plus interference and noise space-frequency co-variance matrix, in combination with said interference and noise-covariance matrix,
- multiply a hermitian transpose of said weight vector by said data signal plus interference and noise space-frequency snapshot, and said detector means (58) operates to
- detect said data symbols from the result of the multiplication.

**7.** A receiver as claimed in any preceding Claim, wherein said predetermined temporal window is substantially in accordance with a multi-path delay spread experienced by said radio signals.

**8.** A receiver as claimed in any preceding Claim, wherein said correlator means (46, 48) is first and second correlator means (46, 48), said first correlator means (46) being arranged to correlate said version of said radio signals with said pilot spreading code to generate said pilot correlated signals, said second correlator means (48) being arranged to correlate said version of said radio signals with said user data spreading code to generate said user data correlated signals.

**9.** A receiver as claimed in any preceding claim, wherein said frequency conversion means is a discrete fourier transformer.

**10.** A method of recovering data for at least one of a plurality of users from spread spectrum radio signals, which include radio signals generated from a combination of the data and a data spreading code associated with said at least one user, and radio signals generated from a combination of a predetermined sequence of pilot data and a pilot spreading code, said method comprising the steps of;

- detecting said radio signals at each of a plurality of antennas;
- for each antenna, generating base band digital signal samples representative of said radio signals;
- for each antenna, correlating said signals samples with respect to said pilot spreading code;
- forming at least one co-variance matrix from a frequency domain representation of a predetermined temporal window of said correlated pilot signals samples;
- for each antenna, correlating said signals samples with respect to said user data spreading code;
- for each antenna, forming a frequency domain representation of said data correlated signal samples; and
- detecting said data from said frequency domain data correlated signal samples in combination with said at least one co-variance matrix.

**11.** A method as claimed in Claim 1, wherein the at least one co-variance matrix comprises a signal plus interference and noise space-frequency co-variance matrix obtained from the frequency domain representation of said pilot correlated signal samples within said temporal window from each of said plurality of antennas in temporal correspondence with said pre-determined pilot data sequence.

**12.** A method as claimed in Claim 10 or 11, wherein said at least one co-variance matrix further includes an interference and noise-covariance matrix obtained from the frequency domain representation of said pilot correlated signal samples within said temporal window from each of said plurality of antennas at different temporal displacements to the position of the pre-determined pilot data sequence.

**13.** A method as claimed in any of Claims 10 to 12, wherein the frequency domain representation of said correlated data symbols from each antenna are combined to form a data signal plus interference and noise space-frequency snapshot.

**14.** A method as claimed in Claim 13, wherein the step of detecting said data further comprises the steps of;

- estimating a weight vector (***w***) from either a signal space-frequency covariance matrix or the signal plus interference and noise space-frequency co-variance matrix, in combination with said interference and noise-covariance matrix;
- multiplying a hermitian transpose of said weight vector by said data signal plus interference and noise space-frequency snapshot; and
- detecting said data symbols from the result of the multiplication.

**15.** A method as claimed in any of Claims 10 to 14, wherein said predetermined temporal window is substantially in accordance with a multi-path delay spread experienced by said radio signals.

**16.** A mobile radio communications apparatus having a receiver as claimed in any preceding claim.

**17.** A receiver as herein before described with reference to the accompanying drawings.

**18.** Apparatus for communicating data via radio signals, comprising

- means for generating spread spectrum radio signals (MS) representative of a combination of the data and a data spreading code associated with at least one user, and a combination of a predetermined sequence of pilot data and a pilot spreading code,
- a plurality of antennas (6), each of which is arranged to detect a different version of said radio signals,
- base band conversion means (14), coupled to said plurality of antennas (6) and ranged to generate, for each antenna, base band signals samples representative of said version of said radio signals,
- a data recovery means (16) which operates to
- correlate each version of said signals samples with respect to said pilot spreading code;
- form at least one covariance matrix from a frequency domain representation of a predetermined temporal window of said correlated pilot signal samples;
- correlate each version of said signals samples with respect to said user data spreading code;
- form a frequency domain representation of each version of said data correlated signal samples; and
- detect said data from said frequency domain data correlated signal samples in combination with said at least one covariance matrix.

**19.** A method of communicating data via radio signals, said method comprising the steps of,

- generating radio signals representative of the data combined with a data spreading code associated with said at least one user, and which radio signals are also representative of a combination of a predetermined sequence of pilot data and a pilot spreading code;
- detecting said radio signals at each of a plurality of antennas;
- for each antenna, generating base band digital signal samples representative of said radio signals;
- for each antenna, correlating said signals samples with respect to said pilot spreading code;
- forming at least one co-variance matrix from a frequency domain representation of a predetermined temporal window of said correlated pilot signal samples;
- for each antenna, correlating said signals samples with respect to said user data spreading code;

- for each antenna, forming a frequency domain representation of said data correlated signal samples; and
- detecting said data from said frequency domain data correlated signal samples in combination with said at least one co-variance matrix.

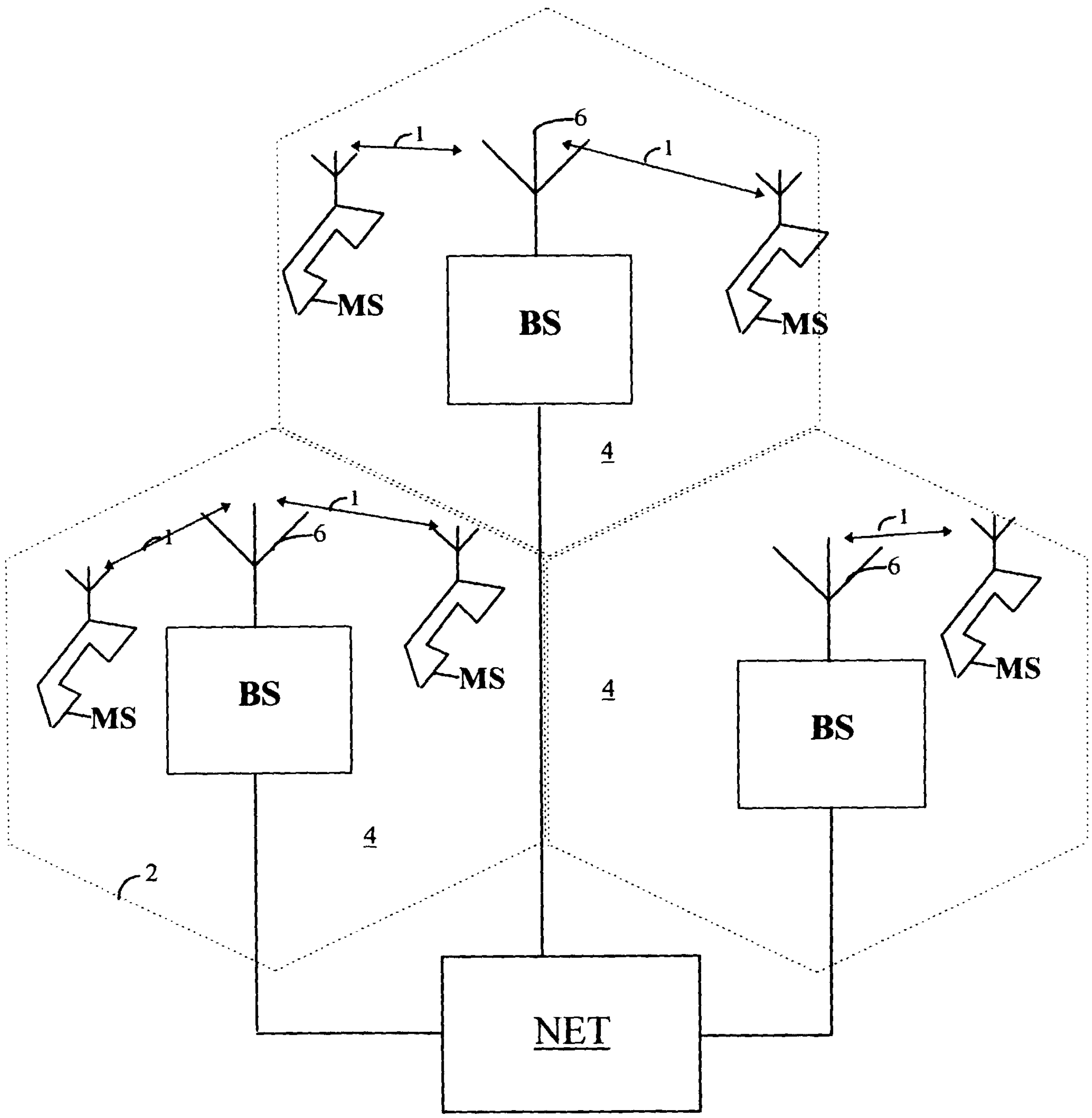


Fig. 1

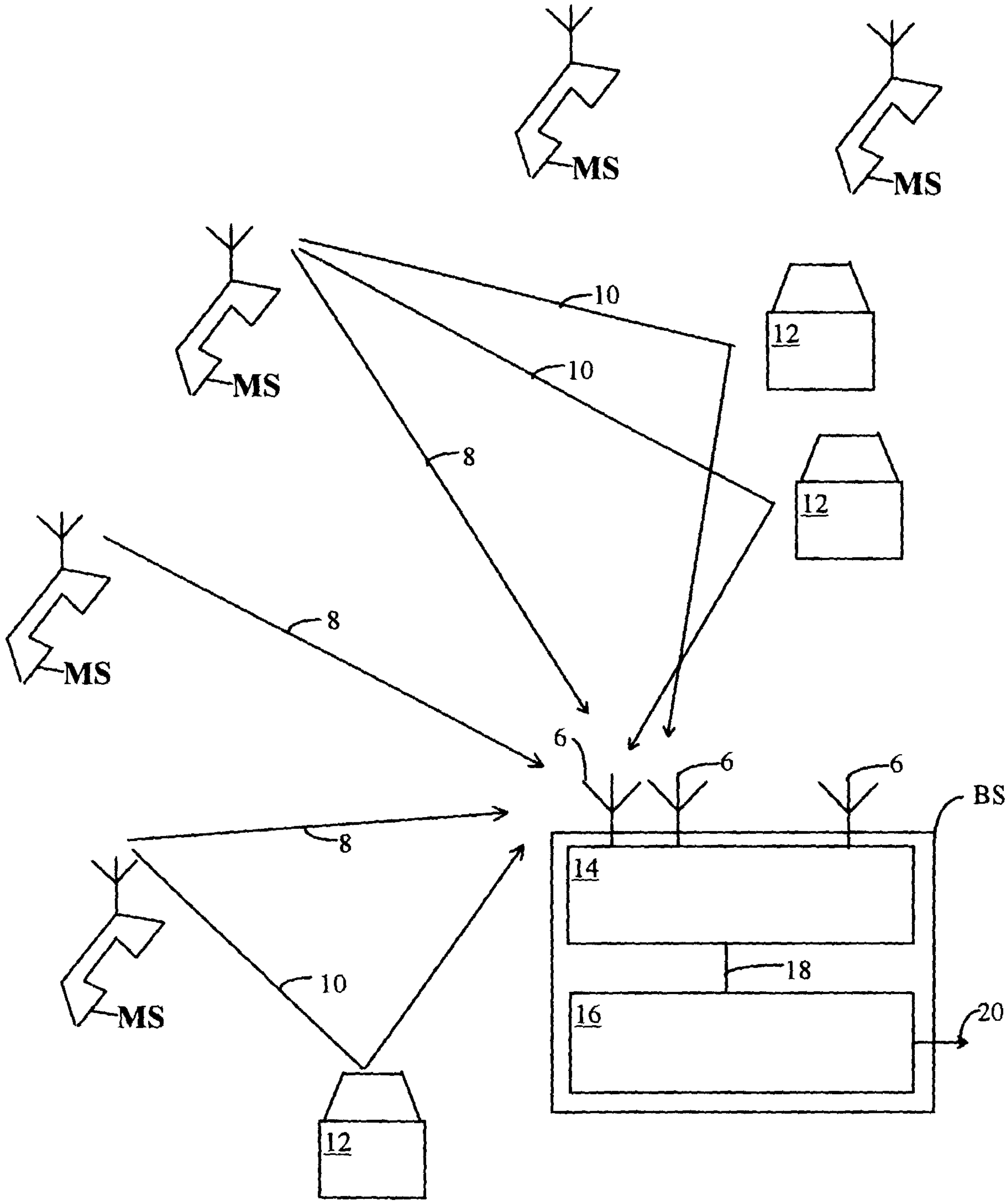


Fig. 2

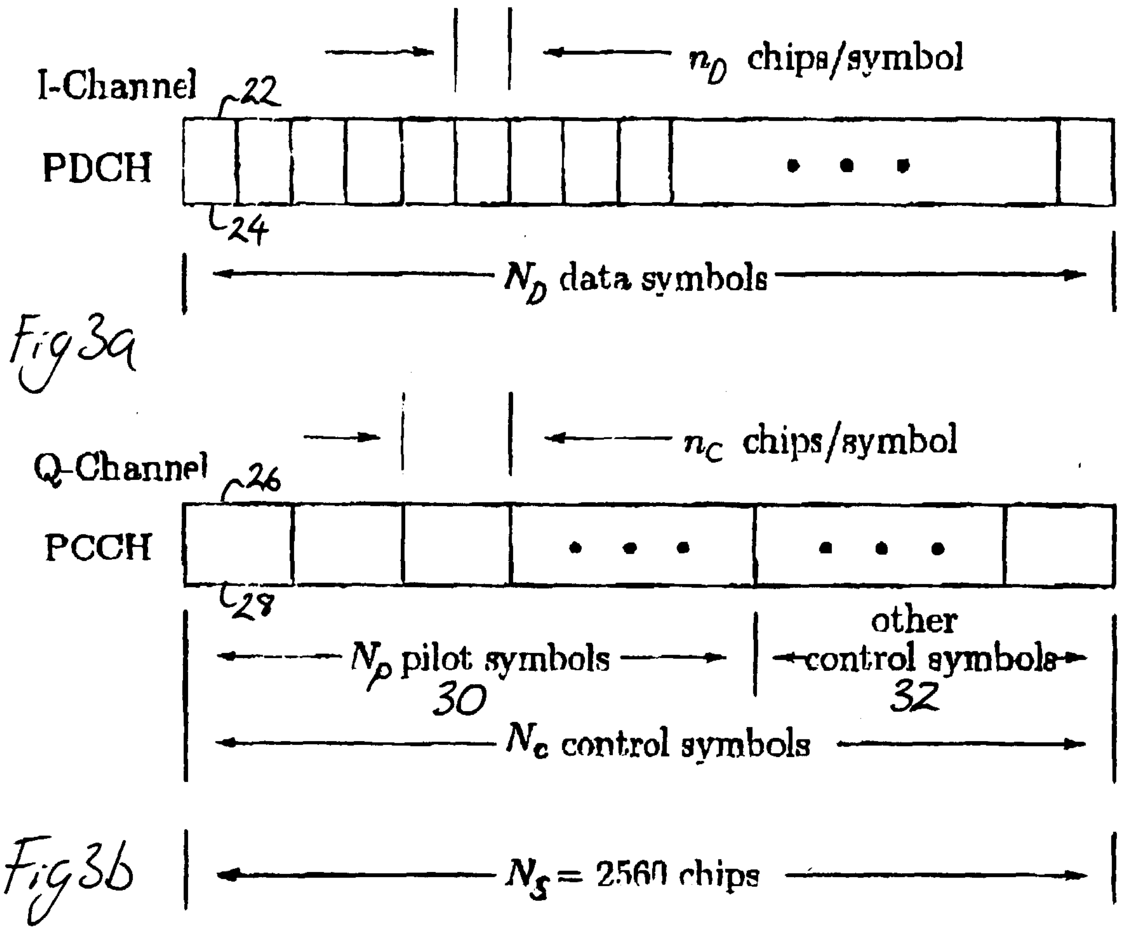
I-Channel
22
PDCH
24
$n_D$ chips/symbol
$N_D$ data symbols
Fig 3a
Q-Channel
26
PCCH
28
$n_C$ chips/symbol
$N_p$ pilot symbols
30
other
control symbols
32
$N_c$ control symbols
Fig 3b
$N_S$ = 2560 chips

Fig. 3

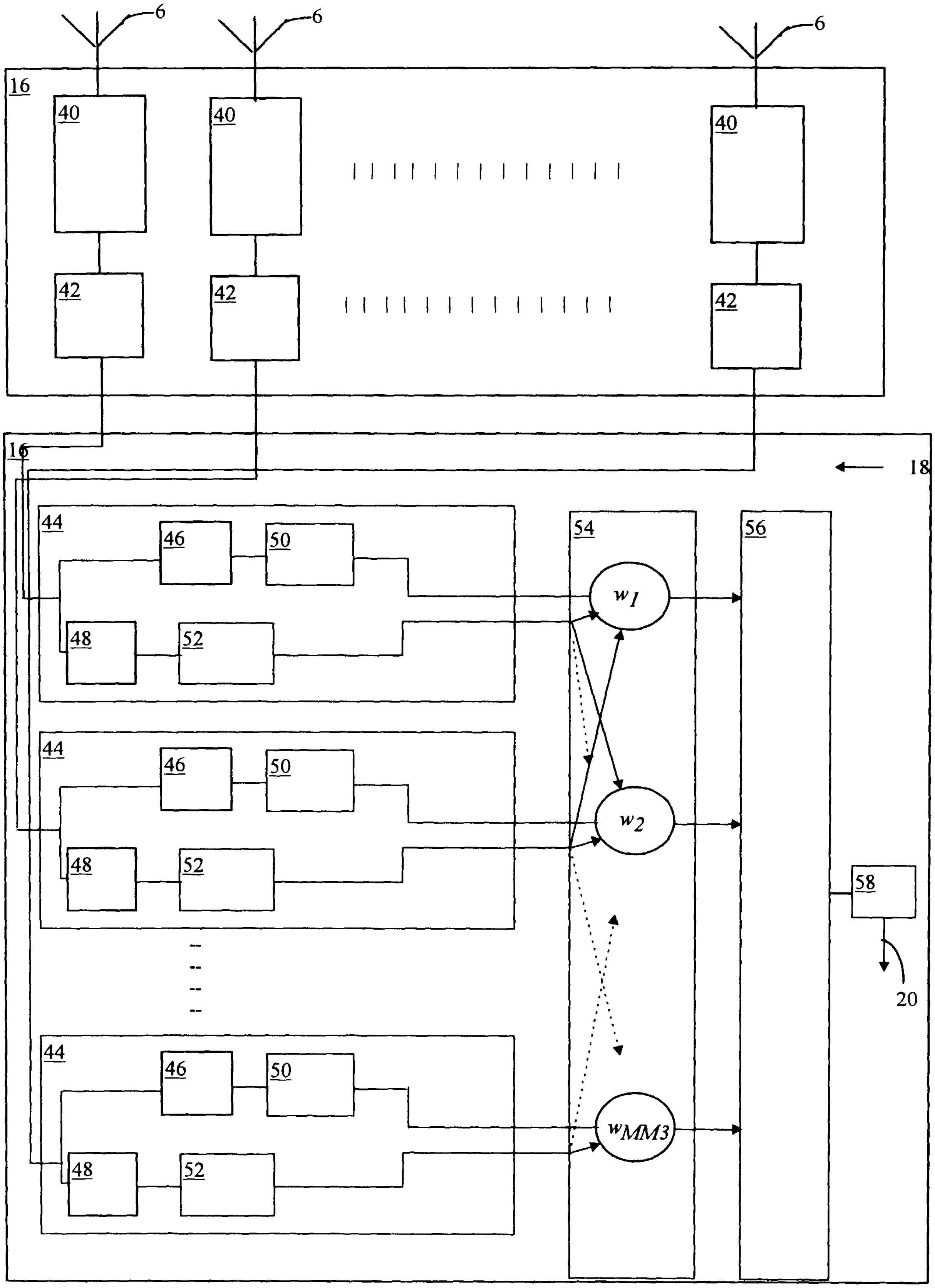
6
6
6
16
40
40
40
42
42
42
16
18
44
46
50
48
52
44
46
50
48
52
44
46
50
48
52
54
$w_1$
$w_2$
$w_{MM3}$
56
58
20

Fig. 4

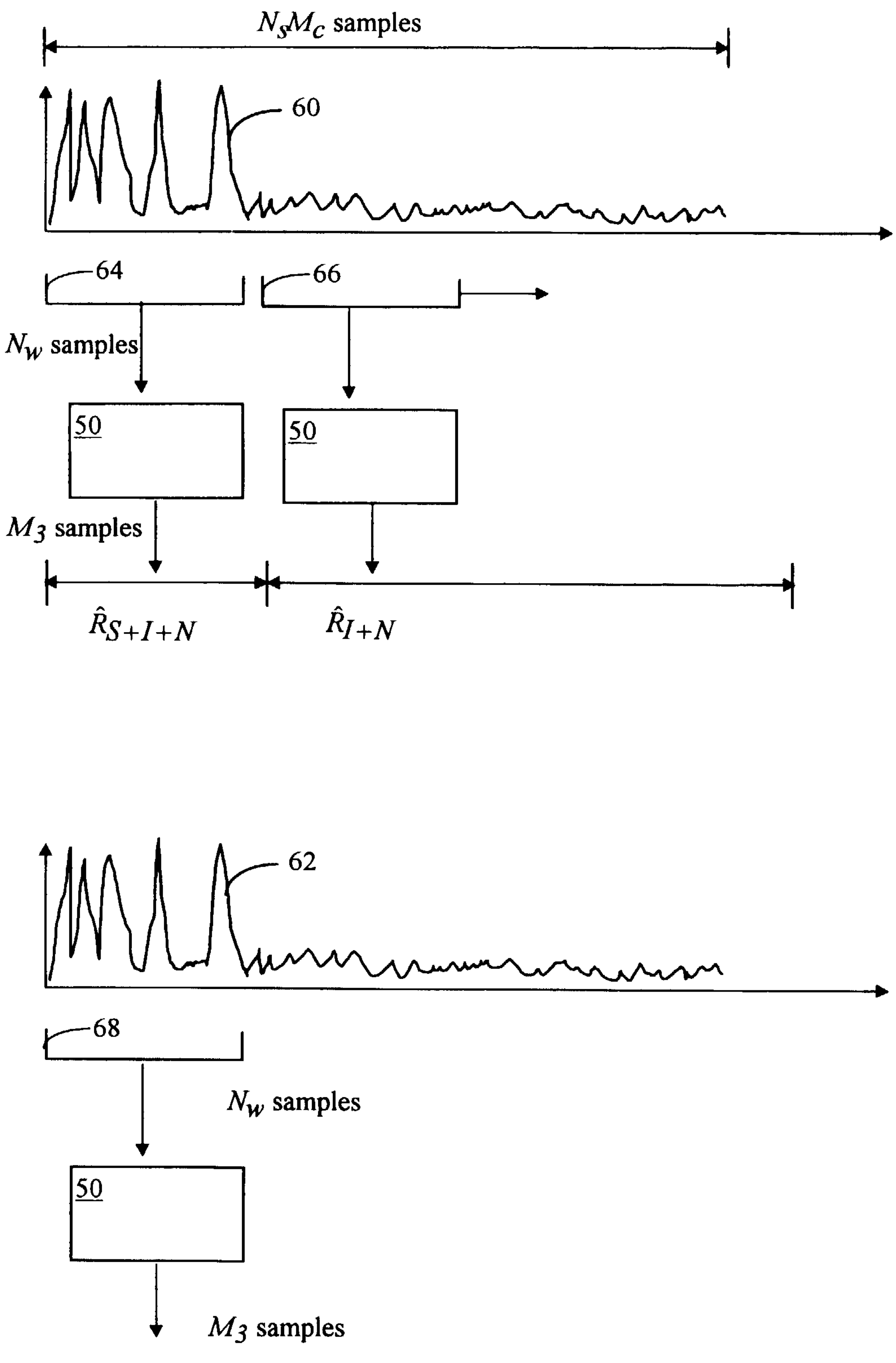
$N_s M_c$ samples
60
64
66
$N_W$ samples
50
50
$M_3$ samples
$\hat{R}_{S+I+N}$
$\hat{R}_{I+N}$
62
68
$N_W$ samples
50
$M_3$ samples

Fig. 5

European Patent Office

# EUROPEAN SEARCH REPORT

Application Number
EP 98 11 3839

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 661 831 A (NIPPON ELECTRIC CO) 5 July 1995<br>* abstract *<br>* page 2, line 5 - line 20 *<br>* page 2, line 32 - line 49 *<br>* claims 1-3; figure 1 * | 1,10,18, 19 | H04B7/08 |
| A | EP 0 825 727 A (NIPPON TELEGRAPH & TELEPHONE) 25 February 1998<br>* abstract *<br>* column 1, line 1 - line 16 *<br>* column 1, line 35 - column 2, line 11 *<br>* column 2, line 41 - column 3, line 41 *<br>* figures 3,6 * | 1,10,18, 19 | |
| A | JAEYOUNG KWAK ET AL: "Adaptive blind 2D RAKE receiver for multiuser detection" VTC '98. 48TH IEEE VEHICULAR TECHNOLOGY CONFERENCE. PATHWAY TO GLOBAL WIRELESS REVOLUTION (CAT. NO.98CH36151), VTC '98. 48TH IEEE VEHICULAR TECHNOLOGY CONFERENCE. PATHWAY TO A GLOBAL WIRELESS REVOLUTION, OTTAWA, ONT., CANADA, 18-21 MAY 1998, pages 313-317 vol.1, XP002092512 ISBN 0-7803-4320-4, 1998, New York, NY, USA, IEEE, USA<br>* page 313, left-hand column, paragraph 2 - page 314, right-hand column, paragraph 5 *<br>* figure 1 * | 1,10,18, 19 | TECHNICAL FIELDS SEARCHED (Int.Cl.6)<br>H04B |

-/--

The present search report has been drawn up for all claims

| Place of search | Date of completion of the search | Examiner |
|---|---|---|
| THE HAGUE | 5 February 1999 | Lõpez Márquez, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

European Patent Office

# EUROPEAN SEARCH REPORT

Application Number
EP 98 11 3839

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | ZOLTOWSKI M D ET AL: "Blind 2-D RAKE receivers based on space-time adaptive MVDR processing for IS-95 CDMA system" MILCOM 96. CONFERENCE PROCEEDINGS (CAT. NO.96CH36008), PROCEEDINGS OF MILCOM '96 IEEE MILITARY COMMUNICATIONS CONFERENCE, MCLEAN, VA, USA, 21-24 OCT. 1996, pages 618-622 vol.2, XP002092513 ISBN 0-7803-3682-8, 1996, New York, NY, USA, IEEE, USA * page 618, left-hand column, paragraph 1 - page 620, left-hand column, paragraph 2 * * figure 1 * | 1,10,18, 19 | |

TECHNICAL FIELDS SEARCHED (Int.Cl.6)

The present search report has been drawn up for all claims

| Place of search | Date of completion of the search | Examiner |
|---|---|---|
| THE HAGUE | 5 February 1999 | Lõpez Márquez, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 98 11 3839

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-1999

| Patent document cited in search report | Publication date | Patent family member(s) | Publication date |
|---|---|---|---|
| EP 0661831 A | 05-07-1995 | JP 2655068 B | 17-09-1997 |
| | | JP 7202757 A | 04-08-1995 |
| | | AU 687471 B | 26-02-1998 |
| | | AU 8179894 A | 06-07-1995 |
| | | CA 2139259 A,C | 01-07-1995 |
| | | US 5528624 A | 18-06-1996 |
| EP 0825727 A | 25-02-1998 | CA 2213654 A | 23-02-1998 |
| | | CN 1182986 A | 27-05-1998 |
| | | JP 10117157 A | 06-05-1998 |

EPO FORM P0459

For more details about this annex : see Official Journal of the European Patent Office, No. 12/82